# EUROPÄISCHE PATENTSCHRIFT

(11) **EP 4 259 932 B1**
(45) Veröffentlichungstag und Bekanntmachung des Hinweises auf die Patenterteilung: **30.09.2026**
(21) Anmeldenummer: 21814667.8
(22) Anmeldetag: 18.11.2021
(51) Int. Cl.: F03D 13/20

(54) **FORMSPERRHOLZELEMENT FÜR WINDKRAFTANLAGEN AUS EINEM SPERRHOLZLAMINAT**
MOLDED PLYWOOD ELEMENT FOR WIND TURBINES MADE FROM A PLYWOOD LAMINATE
ÉLÉMENT EN CONTREPLAQUÉ MOULÉ POUR ÉOLIENNES À PARTIR D'UN LAMINÉ DE CONTREPLAQUÉ

(30) Priorität: 09.12.2020 AT 510682020
(43) Veröffentlichungstag der Anmeldung: 18.10.2023
(73) Patentinhaber: Schweitzer, Johann, 4076 St. Marienkirchen a.d. Polsenz (AT)
(72) Erfinder: Schweitzer, Johann, 4076 St. Marienkirchen a.d. Polsenz (AT)
(74) Vertreter: Hübscher & Partner Patentanwälte GmbH
(86) Internationale Anmeldenummer: PCT/AT2021/060436
(87) Internationale Veröffentlichungsnummer: WO 2022/120398

(56) Entgegenhaltungen:
- WO-A1-2020/149784
- WO-A2-2011/116487
- DE-C- 664 957
- US-A1- 2007 175 583

## Beschreibung

### Technisches Gebiet

Die Erfindung bezieht sich auf ein Formsperrholzelement für Windkraftanlagen aus einem Sperrholzlaminat. Die Erfindung bezieht sich auch auf einen Turm für Windkraftanlagen mit Formsperrholzelementen.

### Stand der Technik

Aus der WO2020149784A1 ist ein Turm für Windkraftanlagen mit aus Holzlaminat gefertigten Holzbauelementen bekannt. Mehrere Holzbauelemente bilden dabei konische Turmmodule, die übereinander angeordnet werden und so einen sich in Turmlängsrichtung verjüngenden Turm bilden. Die Turmmodule sind dabei über eine Vielzahl an Lochplatten miteinander verbunden. Um typischen Lastanforderungen eines Turmes für Windkraftanlagen zu entsprechen, muss für eine ausreichend starke Verbindung eine Vielzahl solcher Lochplatten verklebt werden, was einen äußerst aufwendigen Zusammenbau zur Folge hat. Besonders hohe Kräfte muss dabei der untere Bereich des Turms aufnehmen, sodass an den Innenseiten der Turmmodule balkenförmige Versteifungen vorgesehen sein müssen, was zum einen den freizugänglichen Raum im Turminneren beschränken kann und andererseits wiederum einen erhöhten Konstruktionsaufwand beim Fertigen der Holzbauelemente bedeutet. Darüber hinaus ergibt sich der Nachteil, dass Holz im Laufe der Zeit gewissen Formveränderungen unterzogen ist. Die eingesetzten Lochplatten können diese Formveränderungen allerdings nicht in gleicher Weise mitvollziehen, sodass es zu unerwünschten Spannungen in den Holzbauelementen kommen kann, die die Standzeit des Turms beeinträchtigen.

Aus DE664957C ist ein Formsperrholzelement bekannt, in das Drähte zur Aussteifung eingepresst sind. Die Drähte folgen dabei dem Verlauf der Aussteifung quer zur größten Oberfläche des Formsperrholzelements.

In WO2011116487A2 und WO 2013190498 A1 sind Formsperrholzelemente offenbart, bei denen Stützstrukturen in vorgefertigte Nuten eingeklebt sind.

DE 102012106321 A1 zeigt einen Holzturm mit oktogonalem Querschnitt, der von ebenen Sperrholzelementen gebildet ist. In Bohrungen der Sperrholzelemente sind Zugmittel eingesetzt.

### Darstellung der Erfindung

Der Erfindung liegt somit die Aufgabe zugrunde, Formsperrholzelemente für Windkraftanlagen vorzuschlagen, die einfach und rasch montiert werden können und dennoch eine gute Stabilität sowohl in Hinblick auf die Tragfähigkeit als auch in Hinblick auf beispielsweise windkraftinduzierte Biegemomente bieten.

Erfindungsgemäß wird als Formsperrholz ein Holzlaminat verstanden, welches mehrere Furnierlagen aufweist, die gruppenweise einen unterschiedlich ausgerichteten Faserverlauf aufweisen. Durch das erfindungsgemäße Vorsehen von Formsperrholz wird ein Verziehen des Formsperrholzes vermieden und damit eine Formstabilität gewährleistet. In einer besonders bevorzugten Ausführungsform weisen zwei benachbarte Furnierlagen des Formsperrholzes quer zueinander ausgerichtete Faserverläufe auf.

Die Erfindung löst die gestellte Aufgabe dadurch, dass in das zur Aussteifung quer zu seiner größten Oberfläche verformte Sperrholzlaminat wenigstens ein Zugmittel unter Ausbildung von wenigstens teilweise laminatfreien Anschlussstellen eingepresst ist. Zufolge der erfindungsgemäßen Maßnahmen kann die Stabilität der Formsperrholzelemente maßgeblich erhöht werden. Auf der einen Seite wird die Stabilität durch eine Verformung des Sperrholzlaminats quer zu seiner größten Oberfläche erhöht. Das Sperrholzlaminat ist demzufolge nicht plan, sondern kann zur Erhöhung der Stabilität auf unterschiedliche Art und Weise verformt sein, wodurch eine oder mehrere Aussteifungen gebildet werden. Eine mögliche Verformung kann dabei beispielsweise über im Querschnitt repetitive Muster, wie beispielsweise über Wellen oder ähnliche Formen, erfolgen, wodurch etwaige auftretende Schwingungen besonders effektiv absorbiert werden können. Auf der anderen Seite kann die Stabilität weiter erhöht werden, wenn in das Sperrholzlaminat Zugmittel eingepresst sind, über die mehrere Formsperrholzelemente miteinander verbunden werden können. Vorzugsweise sind die Zugmittel auch mit Furnierlagen des Sperrholzlaminats verklebt. Dadurch kann das Zugmittel bei der Fertigung des Sperrholzlaminats in einfacher Weise zwischen die mit Klebstoff versehenen Furnierlagen eingelegt und dann gemeinsam mit diesen verpresst werden. Zugmittel bieten, im Gegensatz zu Stahlstangen, den Vorteil, dass diese schonender im Formsperrholz verpresst werden können. Je Formsperrholzelement können auch mehrere Zugmittel verpresst sein. Das Zugmittel kann beim Verpressen einer Vorspannung ausgesetzt sein, wodurch die Formstabillität des Formsperrholzelementes verbessert wird. Dieses Vorspannen kann vorzugsweise solange erfolgen, bis das Zugmittel durch den Pressdruck beim Verpressen fixiert ist. Grundsätzlich bietet das Einpressen und gegebenenfalls Verkleben des Zugmittels den Vorteil, dass das Zugmittel von etwaigen witterungsbedingten Oxidationen geschützt ist. Die zwei an das Zugmittel angrenzenden Furnierlagen können in die gleiche Richtung wie das Zugmittel verlaufen. Um einen bündigen Anschluss zwischen den zu verbindenden Formsperrholzelementen zu schaffen, weist das Sperrholzlaminat laminatfreie Anschlussstellen für die jeweiligen Enden des Zugmittels auf, in denen Spannelemente zum Verbinden der Zugmittel unterschiedlicher Formsperrholzelemente angeordnet sein können. Die wenigstens teilweise laminatfreien Anschlussstellen können beispielsweise durch Ausfräsen erzeugt werden. Dadurch wird selbst dann, wenn die Formsperrholzelemente unmittelbar aneinander anschließen, ein Zugang zu den Spannelementen und somit ein Nachjustieren der selbigen ermöglicht, sodass die von den miteinander verbundenen Zugmitteln erzeugte Kraft an etwaige im Laufe der Einsatzzeit entstandenen Materialveränderungen des Sperrholzlaminats angepasst werden kann. Als besonders geeignetes Material zur Ausbildung des Sperrholzlaminats haben sich dabei Eschenfurniere herausgestellt, da Furnierschichtholz aus Eschenfurnieren hohe Zugfestigkeiten, von etwa 106N/mm² aufweist. Unabhängig von der verwendeten Holzart eigenen sich Furnierlagen mit einer Stärke von 0,8 - 6 mm, wobei es sich herausgestellt hat, dass Furnierlagen mit einer Stärke von 3 mm besonders günstige Eigenschaften hinsichtlich der Statik aufweisen. Um das so erzeugte Sperrholzlaminat weiter gegen witterungsbedingte Abnutzung zu schützen, können die äußeren Furnierlagen thermisch modifiziert sein, wodurch das Quellen und Schwinden des Sperrholzlaminats reduziert wird. Insbesondere die Außenseiten der erfindungsgemäßen Formsperrholzelemente können zum Vermeiden der Bildung von Rissen und dem Eindringen von Wasser mit einem Bio-Öl behandelt werden.

Konstruktiv einfach zu fertigende Aussteifungen, die gleichzeitig eine besonders sichere Verbindung von miteinander verbundenen Holbauelementen ermöglichen, ergeben sich, wenn das Sperrholzlaminat in einem quer zu dem Zugmittel verlaufenden Schnitt wellenförmig ausgebildet ist. Die Zugmittel verlaufen also in Längsrichtung der Aussteifungen bzw. in Richtung der sich ergebenden Wellenberge und Wellentäler und somit quer zum wellenförmigen Schnitt des Sperrholzlaminats. Mit Schnitt ist der Querschnitt des Sperrholzlaminats gemeint. Die Wellenform des Sperrholzlaminats kann durch aus dem Stand der Technik bekannte Formpressverfahren mit geeigneten Matrizen und Patrizen geschaffen werden. Durch das erfindungsgemäße Vorsehen der Wellenform des Sperrholzlaminats und dem Verlauf des Zugmittels in Längsrichtung der wellenförmigen Aussteifungen können sowohl große Druck- als auch Zugkräfte aufgenommen werden.

Um eine ausreichend hohe Stabilität der Formsperrholzelemente im unteren Bereich des Turms zu ermöglichen, ist eine bestimmte Mindestanzahl an Aussteifungen in Umfangsrichtung erforderlich. Bei konischen Türmen ist diese Anzahl aber aufgrund der begrenzten Verformbarkeit des Sperrholzlaminats durch den kleineren Umfang im oberen Bereich des Turmes begrenzt, wenn eine gleichmäßige Außenoberfläche gewünscht ist, um eine gute Witterungsbeständigkeit, einen günstigen Widerstandsbeiwert und eine ansprechende Optik zu ermöglichen. Um unter diesen Voraussetzungen eine höhere Stabilität eines Turmes im unteren Bereich zu erreichen, wird vorgeschlagen, dass sich die Anzahl der Wellenberge und/oder Wellentäler des Sperrholzlaminats in Richtung des Zugmittels verringert. Die Verringerung der Anzahl der Wellenberge und/oder Wellentäler erfolgt dabei innerhalb eines Formsperrholzelements, sodass ein gleichmäßiger Übergang zwischen miteinander verbundenen Formsperrholzelementen erzielt werden kann. Dadurch kann einerseits ein Eindringen von Wasser an diesen Übergängen und andererseits ein falscher Zusammenbau verhindert werden, da die Anzahl an Wellenbergen und/oder Wellentälern an den Stoßstellen von in Turmlängsrichtung aneinandergrenzenden Formsperrholzelementen übereinstimmt. Hinzu kommt der Vorteil, dass der untere Bereich eines Turms für Windkraftanlagen durch die Vielzahl an Aussteifungen ausreichende Stabilität aufweist und dass durch Glättung der Aussteifungen in Zugmittelrichtung, also nach oben hin in Turmlängsrichtung, der Widerstandsbeiwert der Formsperrholzelemente abnimmt. Auf diese Weise können die durch hohe Windgeschwindigkeiten im oberen Bereich des Turmes induzierte Biegemomente weiter verringert werden. Um den Widerstandsbeiwert weiter zu senken, kann der Turm im oberen Bereich in eine kreiszylindrische Form übergehen.

Um einerseits große Zugkräfte aufnehmen zu können und gleichzeitig das Verbinden und Nachjustieren mehrerer Formsperrholzelemente zu erleichtern, kann das Zugmittel ein Drahtseil sein, das im Bereich der Anschlussstellen mit einem Spannelement verbunden ist. Durch die strukturierte Oberfläche der Drahtseile kann ein besonders sicheres Verpressen mit dem Sperrholzlaminat ermöglicht werden, da einerseits die Klebefläche vergrößert wird und andererseits ein Verzahnen zwischen den einzelnen Drähten und dem verpressten Sperrholzlaminat erfolgt. Als Spannelement kann beispielsweise eine Schraubverbindung zwischen an den Drahtseilen befestigten Außengewinden vorgesehen sein. So können die Drahtseile unterschiedlicher Formsperrholzelemente im Bereich der Anschlussstellen über das gemeinsame Spannelement verbunden sein. Im Sinne eines einfachen Verbindens bzw. Nachjustierens von Drahtseilen unterschiedlicher Formsperrholzelemente, ist es vorteilhaft, wenn die Gewinde der jeweiligen zu verbindenden Drahtseile unterschiedliche Gewinderichtungen aufweisen, sodass durch die Drehung einer Spannmutter in eine Umdrehungsrichtung der Abstand zwischen den Drahtseilenden verringert bzw. vergrößert und somit die Zugkraft variiert werden kann. Als Drahtseil kann beispielsweise ein Stahlseil dienen, das in das Sperrholzlaminat eingepresst ist. Das Zugmittel kann beispielsweise einen Durchmesser von bis zu 30 mm aufweisen, wodurch sich ein besonders günstiges Verpressen im Sperrholzlaminat ergibt, da bei diesem Durchmesser ein gleichbleibend dickes Formsperrholelement erzeugt werden kann, ohne dass das Zugmittel Auswölbungen verursacht. Ein Stahlseil mit einem Durchmesser von 20 mm kann beispielsweise eine Zugkraft von 30t aufweisen.

Die Anzahl der Furnierlagen des Sperrholzlaminats bestimmt dessen Dicke bzw. Stärke. Ist das Zugmittel in einem besonders dicken Sperrholzlaminat eingepresst, so kann dies zu einer schweren Zugänglichkeit des Zugmittels führen, wodurch das Verbinden bzw. Nachjustieren unterschiedlicher Formsperrholzelemente erschwert wird. Um daher eine einfache Zugänglichkeit beim Verbinden bzw. Verspannen unterschiedlicher Formsperrholzelemente mit großer Stärke bzw. Dicke zu ermöglichen, hat es sich als praktikabel erwiesen, wenn das Zugmittel in einem randseitige Drittel der Furnierlagen des Sperrholzlaminats verläuft. Die Zugmittel sind demnach in einem äußeren Drittel der Querschnittsdicke des Sperrholzlaminats eingepresst.

Werden die Formsperrholzelemente für Türme eingesetzt, wie nachfolgend beschrieben, so ist es vorteilhaft, dass die Zugmittel in jenem Drittel der Querschnittsdicke des Sperrholzelements angeordnet sind, das dem Innenraum des Turmes zugewandt ist. Auf diese Weise kann eine einfache Zugänglichkeit der Zugmittel, sowie der Anschlussstellen vom Turminnenraum ermöglicht werden.

Die Formsperrholzelemente sind insbesondere für Türme für Windkraftanlagen einsetzbar, wobei die Formsperrholzelemente bogenförmig um die Turmlängsrichtung gekrümmt sind, entlang deren Richtung die Zugmittel verlaufen. Zusätzlich zu den Verformungen des Sperrholzlaminats zur Aussteifung ist das Sperrholzlaminat demnach bogenförmig um die Turmlängsachse gekrümmt. Auf diese Weise können die Formsperrholzelemente Turmmodule bilden, die übereinander gestapelt bzw. übereinander angeordnet den Turm ausbilden. Die Zugmittel sind dabei so entlang der Turmlängsrichtung ausgerichtet, dass die Anschlussstellen der Zugmittel übereinandergestapelter Turmmodule miteinander verbunden werden können. Die Zugmittel müssen hierzu nicht unbedingt koaxial zur Turmlängsrichtung verlaufen, sondern lediglich im Wesentlichen entlang der Turmlängsrichtung. Durch den erfindungsgemäßen Einsatz der Aussteifungen und der Zugmittel kann die Stabilität des Turmes erhöht werden, ohne etwaige zusätzliche Stützen im Turminnenraum vorsehen zu müssen, wodurch dieser ausreichend Platz für etwaige Aufstiegsvorrichtungen zum Erreichen einer auf dem Turm aufgesetzten Gondel bietet. Die Turmmodule weisen im Wesentlichen die gleichen materialabhängigen Spezifikationen auf, sodass sich über den gesamten Turm hinweg gleiche Eigenschaften hinsichtlich der Stabilität ergeben. Das unterste Turmmodul kann einen Adapter für Fundamentschrauben eines Betonfundaments aufweisen. Als Adapter eignen sich beispielsweise Beton- oder Stahladapter. Auch für die Gondel der Windkraftanlage kann ein Adapter am obersten Turmmodul vorgesehen sein. Um die Formsperrholzelemente gegen Verwitterung zu schützen, hat es sich als besonders wirksam herausgestellt, wenn die Faserrichtung der äußeren beiden Furnierlagen des Sperrholzlaminats in Turmlängsrichtung verlaufen. Die Turmmodule können beispielsweise eine Höhe von 13 m, eine Dicke von 10-25 cm und einen Durchmesser von 8 m aufweisen, wobei als Maß des Durchmessers der Außendurchmesser verwendet wird, da die Stärke der Formsperrholzelemente produktionsbedingt leicht variieren kann. Aneinander angrenzende Turmmodule weisen demnach an deren Stoßstellen den gleichen Außendurchmesser auf. Diese Dimensionen lassen einen Transport mit gängigen LKWs zu.

Sowohl statisch als auch strömungstechnisch günstige Eigenschaften ergeben sich, wenn sich der Krümmungsradius der Formsperrholzelemente in Turmlängsrichtung verringert. Dadurch ergibt sich ein im Wesentlichen konisch geformter Turm. Der Turm kann im oberen Bereich eine zylindrische Form aufweisen. In diesem Bereich verringert sich demnach der Krümmungsradius nicht. Bei entsprechend geringem Radius kann der Turm im oberen Bereich auch eine kreiszylindrische Form aufweisen. Eine bevorzugte Ausgestaltungsform des Turms wird dadurch erhalten, dass das Sperrholzlaminat der Formsperrholzelemente in einem quer zu dem Zugmittel verlaufenden Schnitt wellenförmig ausgebildet ist. Um verbesserte Strömungsbedingungen im oberen Bereich des Turms zu erzeugen, kann sich die Anzahl der Wellenberge und/oder Wellentäler des Sperrholzlaminats in Richtung des oberen Bereiches des Turms verringern.

Um einerseits die Fertigung der Formsperrholzelemente und andererseits deren Transport zu vereinfachen, wird vorgeschlagen, dass in Umfangsrichtung des Turmes mehrere Formsperrholzelemente vorgesehen sind und dass die in Turmlängsrichtung aneinander angrenzenden Formsperrholzelemente zueinander in Umfangsrichtung versetzt angeordnet sind. Die in Umfangsrichtung des Turmes aneinandergrenzenden Formsperrholzelemente können mithilfe von aus dem Stand der Technik bekannten Formpressverfahren werksseitig gefertigt werden und vor Ort zu Turmmodulen zusammengebaut werden. Dies kann beispielsweise durch Form- und Stoffschluss ermöglicht werden. Eine geeignete Möglichkeit stellt eine verklebte Keilzinkverbindung dar. Die Keilzinkverbindung kann zusätzlich durch Verschraubungen gesichert sein. Auch die übereinander gestapelten Turmmodule können neben der erfindungsgemäßen Verbindung mithilfe der Zugmittel zusätzlich über einen Form- und/oder Stoffschluss miteinander verbunden sein. Auch hier kann eine verklebte Keilzinkverbindung vorgesehen sein, die in die Stoßstellen der Formsperrholzelemente, beispielsweise durch CNC-Fräsen, eingefräst ist. Die Größe der Keilzinkverbindung ist von der Dimension der Turmmodule abhängig und verläuft vorzugsweise unterbrechungsfrei entlang der Turmmodulkanten. Typische Ausführungsformen der Turmmodule weisen je nach Durchmesser des Turms vier oder acht in Umfangsrichtung des Turms miteinander verbundene Formsperrholzelemente auf. Die Formsperrholzelemente eines Turmmoduls weisen vorzugsweise die gleiche Dimensionierung auf, sodass die Bogenlänge der Formsperrholzelemente beim Einsatz von vier Formsperrholzelementen einem Viertel des Turmmodulumfangs entspricht und in analoger Weise die Bogenlänge bei acht Formsperrholzelementen einem Achtel des Turmmodulumfangs. Die Formsperrholzelemente von aufeinanderfolgenden Turmmodulen sind dabei in Umfangrichtung versetzt angeordnet, um ein Zusammenfallen der entlang der Turmlängsrichtung verlaufenden Stoßstellen zu verhindern und somit eine gleichmäßige Kraftübertragung zwischen den Formsperrholzelementen zu ermöglichen. Vorzugsweise sind die Formsperrholzelemente um die halbe Bogenlänge eines Formsperrholzelements zueinander versetzt. Ein Formsperrholzelement kann beispielsweise vier Stahlseile mit einem Durchmesser von 20mm als Zugmittel umfassen. Typische Zugkräfte von solchen Stahlseilen betragen 30 t. Ein Turmmodul umfassend vier solcher Formsperrholzelemente kann demnach eine Zugkraft von 480 t erreichen.

Damit ein solcher Versatz der Turmmodule ermöglicht wird, ohne dabei den Zusammenbau des Turms zu erschweren, empfiehlt es sich, dass die Anschlussstellen der Zugmittel von in Turmlängsrichtung aneinandergrenzenden Formsperrholzelementen an übereinstimmenden Umfangspositionen liegen.

### Kurze Beschreibung der Erfindung

In der Zeichnung ist der Erfindungsgegenstand beispielsweise dargestellt. Es zeigen
- Fig. 1: zwei über ein Spannelement miteinander verbundene Formsperrholzelemente in einer abgerissenen Darstellung,
- Fig. 2: eine Detailansicht eines Schnitts der Fig. 1 entlang der Linie II-II in größerem Maßstab,
- Fig. 3: einen Schnitt der Fig. 1 entlang der Linie III-III in größerem Maßstab,
- Fig. 4: einen Turm für Windkraftanlagen mit erfindungsgemäßen Formsperrholzelementen,
- Fig. 5: einen Schnitt der Fig. 4 entlang der Linie V-V in größerem Maßstab,
- Fig. 6: einen Schnitt der Fig. 4 entlang der Linie VI-VI in größerem Maßstab,
- Fig. 7: einen Schnitt der Fig. 4 entlang der Linie VII-VII in größerem Maßstab und
- Fig. 8: eine Keilverzinkung zum Verbinden zweier erfindungsgemäßer Formsperrholzelemente.

### Wege zur Ausführung der Erfindung

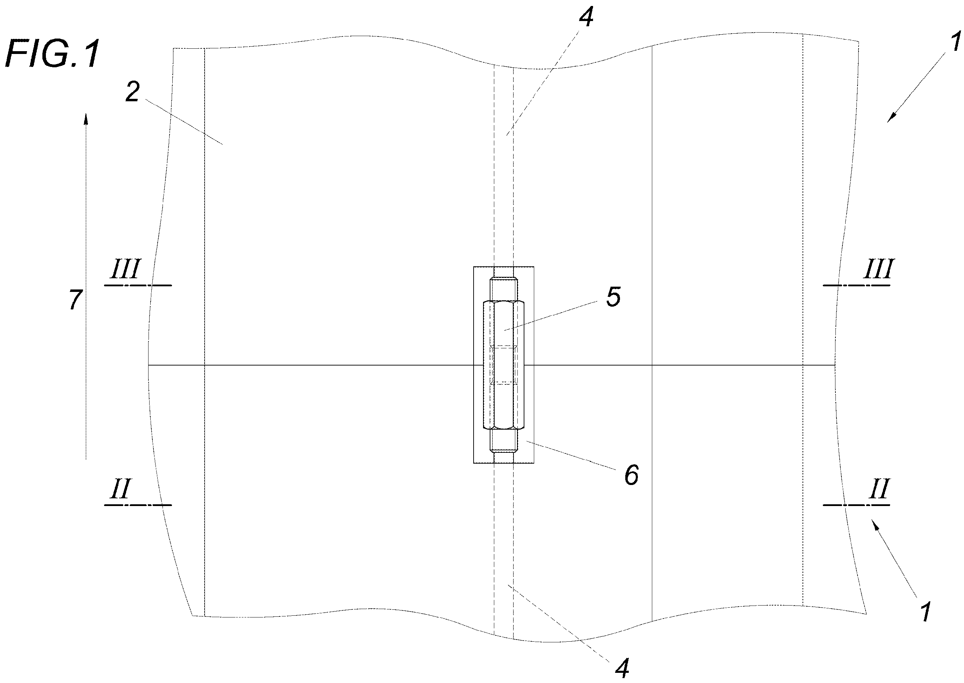

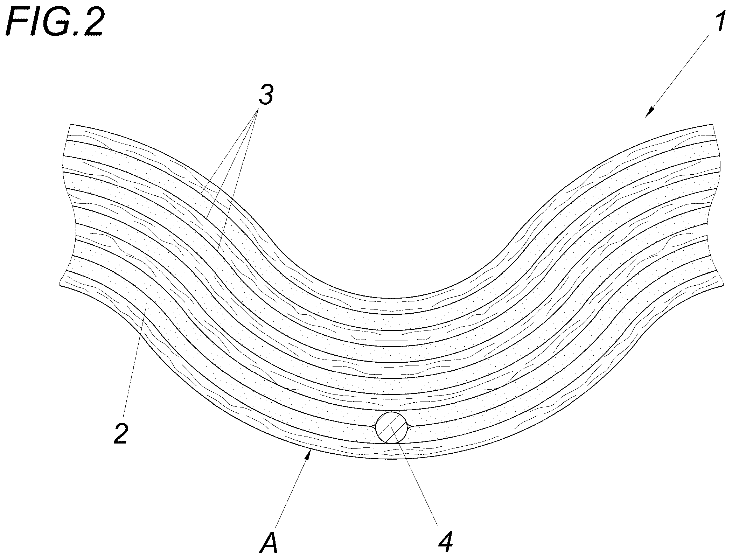

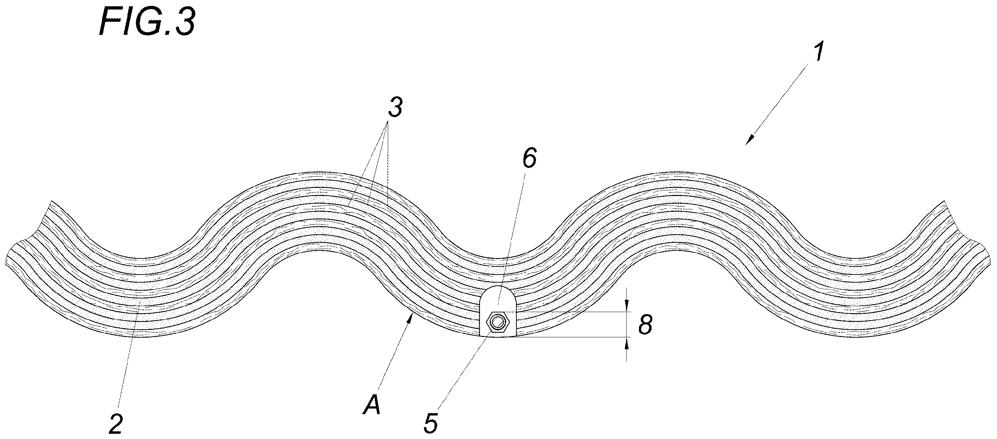

Ein erfindungsgemäßes Formsperrholzelement 1 ist, wie insbesondere den Figs. 1 bis 3 zu entnehmen ist, aus einem Sperrholzlaminat 2 umfassend mehrere Furnierlagen 3 gebildet. Als Aussteifung ist das Sperrholzlaminat 2 quer zu seiner größten Oberfläche A verformt, wie dies insbesondere den Figs. 2 und 3 entnommen werden kann. In der Fig. 1 sind die Aussteifungen durch Lichtkanten angedeutet. Um einerseits besonders große Zugkräften abtragen zu können und andererseits eine einfach umzusetzende Verbindung zwischen mehreren Formsperrholzelementen 1 zu ermöglichen, ist in das Sperrholzlaminat 2 wenigstens ein Zugmittel 4 eingepresst (Fig. 2). Mehrere Formsperrholzelemente1 können daher über Spannelemente 5, welche die Zugmittel 4 miteinander verspannen, verbunden sein. Das Verbinden wird erfindungsgemäß dadurch erleichtert, dass das Zugmittel 4 unter Ausbildung von wenigstens teilweise laminatfreien Anschlussstellen 6 eingepresst ist. Das Zugmittel 4 kann beim Einpressvorgang mit den umliegenden Furnierlagen 3 verklebt sein. Die Anschlussstellen 6 können in das Sperrholzlaminat 2 eingefräst sein.

Wie insbesondere aus den Figs. 2 und 3 ersichtlich ist, kann das Sperrholzlaminat 2 in einem quer zu dem Zugmittel 4 verlaufenden Schnitt wellenförmig ausgebildet sein. Dies bedeutet, dass das Zugmittel 4 in Längsrichtung 7 der von den Wellen gebildeten Aussteifungen verläuft, wodurch entlang der Längsrichtung 7 besonders hohe Zugkräfte aufgenommen werden können.

Das Zugmittel 4 kann vorteilhafterweise ein Drahtseil sein. Zwei Drahtseile können im Bereich der Anschlussstellen 6 über ein Spannelement 5 miteinander verbunden sein. Die Drahtseile können beispielsweise ein Gewinde aufweisen, wodurch ein einfaches Spannen mithilfe einer Spannmutter als Spannelement 5 ermöglicht wird. Die Gewinde der jeweiligen zu verbindenden Drahtseile können vorteilhafterweise unterschiedliche Gewinderichtungen aufweisen, sodass durch die Drehung der Spannmutter in eine Umdrehungsrichtung der Abstand zwischen den Drahtseilen verringert bzw. vergrößert werden kann.

Um auch ein Nachjustieren der Spannkraft auch bei besonders dicken Formsperrholzelementen 1 zu ermöglichen, kann das Zugmittel 4 in einem randseitigen Drittel 8 der Furnierlagen 3 eingepresst sein (Fig. 3).

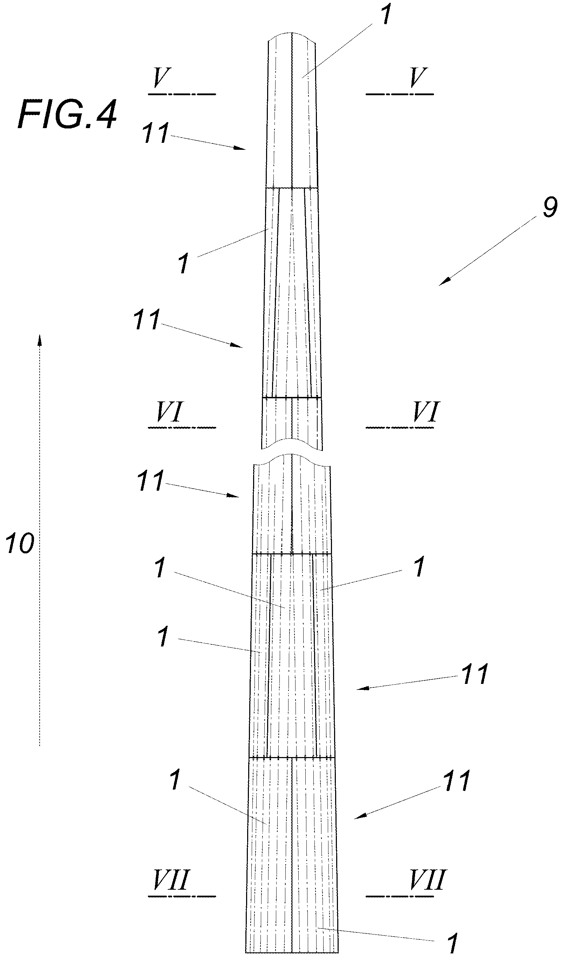

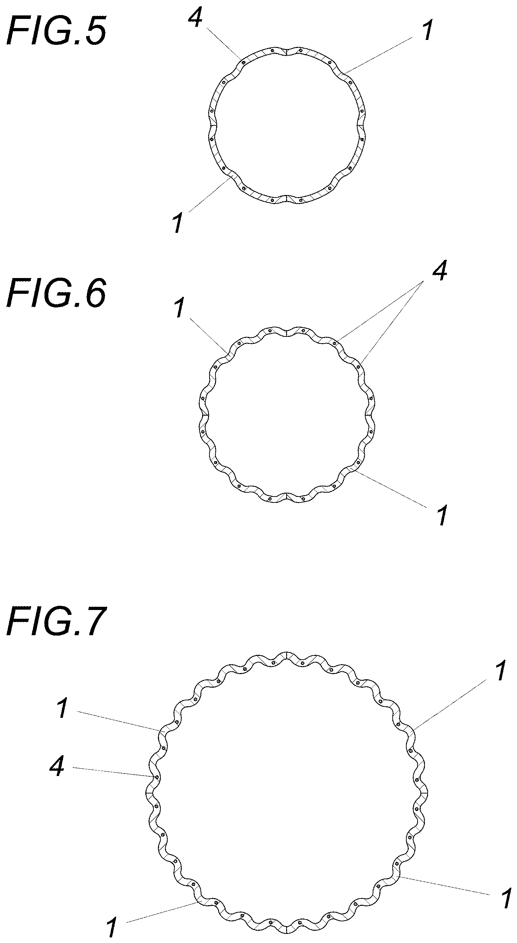

Fig. 4 zeigt einen Turm 9 für Windkraftanlagen mit erfindungsgemäßen Formsperrholzelementen 1. Die Formsperrholzelemente 1 sind dabei bogenförmig um die Turmlängsrichtung 10 gekrümmt, sodass Turmmodule 11 gebildet werden. Die Figs. 5 bis 7 zeigen dabei die Querschnitte unterschiedlicher Turmmodule 11, wobei neben der bogenförmigen Krümmung um die Turmlängsrichtung verdeutlicht wird, dass die Formsperrholzelemente zusätzlich wellenförmige Aussteifungen aufweisen. Die Zugmittel 4 verlaufen entlang der Turmlängsrichtung 10. Dies bedeutet allerdings nicht, dass die Zugmittel 4 parallel zur Turmlängsrichtung verlaufen müssen. Vielmehr muss gewährleistet sein, dass die Zugmittel 4 von aneinander angrenzenden Turmmodulen 11 miteinander verbunden werden können.

Die Krümmungsradien der Krümmung um die Turmlängsachse 10 der Formsperrholzelemente 1 können sich zur Ausbildung eines im Wesentlichen konischen Turms in Richtung der Turmlängsrichtung 10 verkleinern, wodurch einerseits eine stabile Basis des Turms 9 geschaffen und andererseits der Strömungswiderstand verkleinert werden kann. Dies kann weiter verstärkt werden, wenn sich die Anzahl der Wellenberge und/oder Wellentäler des Sperrholzlaminats 2 in Richtung des Zugmittels 4 verringert, wie dies aus den Figs. 4 bis 7 ersichtlich ist. Sind die Formsperrholzelemente 1 in einem Turm 9 verbaut, so verringert sich die Anzahl der Wellenberge und/oder Wellentäler nach oben hin in Turmlängsrichtung 10.

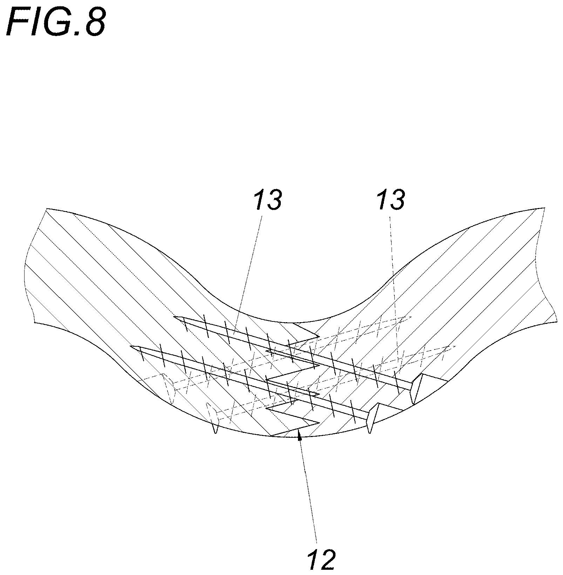

Ein einfaches Herstellungsverfahren, sowie ein geringer Transportaufwand ergeben sich, wenn in Umfangsrichtung des Turmes 9 mehrere Formsperrholzelemente 1 vorgesehen sind. Mehrere Formsperrholzelemente 1, beispielsweise vier oder acht, können gemeinsam zu Turmmodulen 11 (Fig. 4) zusammengesetzt sein. Die Formsperrholzelemente 1 können dabei über eine in Fig. 8 näher dargestellte Keilzinkverbindungen 12 miteinander formschlüssig verbunden und darüber hinaus verklebt sein. Die äußere Keilverzinkung kann kürzer und abgeflacht ausgebildet sein, um einem unerwünschten Wassereintritt entgegenzuwirken. Zusätzlich können die in Umfangsrichtung des Turmes 9 aneinandergrenzenden Formsperrholzelemente 1 mithilfe von Schrauben 13, beispielsweise aus rostfreiem Edelstahl mit Teilgewinde, miteinander fixiert werden. Die Einschraubstellen für die Schrauben 13 können mithilfe von CNC-Fräsern vorgebohrt werden, wodurch einerseits eine gleichmäßige Zugkraft durch die Schrauben 13 ermöglicht wird und andererseits etwaige Beschädigung im Formsperrholzelement beim Einschrauben verhindert werden können. Wie aus Fig. 4 erkenntlich, sind die in Turmlängsrichtung 10 aneinander angrenzenden Formsperrholzelemente 1 zueinander in Umfangsrichtung versetzt angeordnet, was zu einer gleichmäßigen Lastverteilung über die Formsperrholzelemente 1 hinweg führt.

Die Anschlussstellen 6 der Zugmittel 4 von in Turmlängsrichtung aneinandergrenzenden Formsperrholzelementen 1 liegen an übereinstimmenden Umfangspositionen, um ein ordnungsgemäßes Zusammenbauen des Turms 9 zu erleichtern.

## Patentansprüche

1. Formsperrholzelement (1) für Windkraftanlagen aus einem Sperrholzlaminat (2), **dadurch gekennzeichnet, dass** in das zur Aussteifung quer zu seiner größten Oberfläche verformte Sperrholzlaminat (2) wenigstens ein Zugmittel (4) unter Ausbildung von wenigstens teilweise laminatfreien Anschlussstellen (6) eingepresst ist.

2. Formsperrholzelement (1) nach Anspruch 1, **dadurch gekennzeichnet, dass** das Sperrholzlaminat (2) in einem quer zu dem Zugmittel (4) verlaufenden Schnitt wellenförmig ausgebildet ist.

3. Formsperrholzelement nach Anspruch 2, **dadurch gekennzeichnet, dass** sich die Anzahl der Wellenberge und/oder Wellentäler des Sperrholzlaminats (2) in Richtung des Zugmittels (4) verringert.

4. Formsperrholzelement nach einem Ansprüche 1 bis 3, **dadurch gekennzeichnet, dass** das Zugmittel (4) ein Drahtseil ist, das im Bereich der Anschlussstellen (6) mit einem Spannelement (5) verbunden ist.

5. Formsperrholzelement nach einem der Ansprüche 1 bis 4, **dadurch gekennzeichnet, dass** das Zugmittel (4) in einem randseitige Drittel der Furnierlagen (3) des Sperrholzlaminats verläuft.

6. Turm (9) für Windkraftanlagen mit Formsperrholzelementen (1) nach einem der vorangegangenen Ansprüche, **dadurch gekennzeichnet, dass** die Formsperrholzelemente (1) bogenförmig um die Turmlängsrichtung (10) gekrümmt sind, entlang deren Richtung die Zugmittel (4) verlaufen.

7. Turm (9) nach Anspruch 6, **dadurch gekennzeichnet, dass** sich der Krümmungsradius der Formsperrholzelemente (1) in Turmlängsrichtung (10) verringert.

8. Turm (9) nach Anspruch 6 oder 7, **dadurch gekennzeichnet, dass** in Umfangsrichtung des Turmes (9) mehrere Formsperrholzelemente (1) vorgesehen sind und dass die in Turmlängsrichtung (10) aneinander angrenzenden Formsperrholzelemente (1) zueinander in Umfangsrichtung versetzt angeordnet sind.

9. Turm (9) nach einem der Ansprüche 6 bis 8, **dadurch gekennzeichnet, dass** die Anschlussstellen (6) der Zugmittel (4) von in Turmlängsrichtung aneinandergrenzenden Formsperrholzelementen (1) an übereinstimmenden Umfangspositionen liegen.

## Claims

1. A molded plywood element (1) for wind turbines, comprising a plywood laminate (2), **characterized in that** at least one tension member (4) is pressed into the plywood laminate (2), which is deformed transversely to its largest surface for stiffening, such that at least partially laminate-free connection regions (6) are formed.

2. The molded plywood element (1) according to claim 1, **characterized in that** the plywood laminate (2) has a wave-shaped configuration in a section extending transversely to the tension member (4)..

3. The molded plywood element according to claim 2, **characterized in that** the number of wave crests and/or wave troughs of the plywood laminate (2) decreases in the direction of the tension member (4).

4. The molded plywood element according to any one of claims 1 to 3, **characterized in that** the tension member (4) is a wire rope which is connected to a tensioning element (5) in the region of the connection regions (6).

5. The molded plywood element according to any one of claims 1 to 4, **characterized in that** the tension member (4) extends in an edge-side third of the veneer layers (3) of the plywood laminate.

6. A tower (9) for wind turbines, comprising molded plywood elements (1) according to any one of the preceding claims, **characterized in that** the molded plywood elements (1) are curved in an arcuate manner around the longitudinal direction (10) of the tower, the tension members (4) extending in said direction.

7. The tower (9) according to claim 6, **characterized in that** the radius of curvature of the molded plywood elements (1) decreases in the longitudinal direction (10) of the tower.

8. The tower (9) according to claim 6 or 7, **characterized in that** a plurality of molded plywood elements (1) are provided in the circumferential direction of the tower (9), and **in that** the molded plywood elements (1) adjoining one another in the longitudinal direction (10) of the tower are arranged offset relative to one another in the circumferential direction.

9. The tower (9) according to any one of claims 6 to 8, **characterized in that** the connection regions (6) of the tension members (4) of molded plywood elements (1) adjoining one another in the longitudinal direction of the tower are located at corresponding circumferential positions.

## Revendications

1. Élément en contreplaqué moulé (1) pour éoliennes, constitué d'un stratifié de contreplaqué (2), **caractérisé en ce qu'**au moins un moyen de traction (4) est enfoncé dans le stratifié de contreplaqué (2) déformé transversalement par rapport à sa plus grande surface à des fins de renforcement, en formant des points de raccordement (6) au moins partiellement dépourvus de stratifié.

2. Élément en contreplaqué moulé (1) selon la revendication 1, **caractérisé en ce que** le stratifié de contreplaqué (2) présente une forme ondulée dans une coupe s'étendant transversalement par rapport au moyen de traction (4).

3. Élément en contreplaqué moulé selon la revendication 2, **caractérisé en ce que** le nombre de crêtes et/ou de creux du stratifié en contreplaqué (2) diminue dans la direction du moyen de traction (4).

4. Élément en contreplaqué moulé selon l'une des revendications 1 à 3, **caractérisé en ce que** le moyen de traction (4) est un câble métallique qui est relié à un élément de tension (5) au niveau des points de raccordement (6).

5. Élément en contreplaqué moulé selon l'une des revendications 1 à 4, **caractérisé en ce que** le moyen de traction (4) s'étend dans un tiers marginal des couches de placage (3) du stratifié en contreplaqué.

6. Tour (9) pour éoliennes comportant des éléments en contreplaqué moulé (1) selon l'une des revendications précédentes, **caractérisée en ce que** les éléments en contreplaqué moulé (1) sont courbés en forme d'arc autour de la direction longitudinale (10) de la tour, direction le long de laquelle s'étendent les moyens de traction (4).

7. Tour (9) selon la revendication 6, **caractérisée en ce que** le rayon de courbure des éléments en contreplaqué moulé (1) diminue dans la direction longitudinale de la tour (10).

8. Tour (9) selon la revendication 6 ou 7, **caractérisée en ce que** plusieurs éléments de contreplaqué moulé (1) sont prévus dans la direction circonférentielle de la tour (9) et **en ce que** les éléments de contreplaqué moulé (1) adjacents les uns aux autres dans la direction longitudinale de la tour (10) sont disposés de manière décalée les uns par rapport aux autres dans la direction circonférentielle.

9. Tour (9) selon l'une des revendications 6 à 8, **caractérisée en ce que** les points de raccordement (6) des moyens de traction (4) d'éléments de contreplaqué moulé (1) adjacents dans la direction longitudinale de la tour se trouvent à des positions circonférentielles correspondantes.
